# EUROPEAN PATENT SPECIFICATION

(11) **EP 1 018 796 B1**
(45) Date of publication and mention of the grant of the patent: **22.10.2003**
(21) Application number: 99124915.2
(22) Date of filing: 14.12.1999
(51) Int. Cl.: H02K 5/15, H02K 5/04, H02K 5/24, H02K 5/167

(54) **Stepping motor**
Schrittmotor
Moteur pas à pas

(30) Priority: 06.01.1999 JP 108599
(43) Date of publication of application: 12.07.2000
(73) Proprietor: SEIKO EPSON CORPORATION, Shinjuku-ku, Tokyo 163-0811 (JP)
(72) Inventor: Ikegami, Akihiko, Suwa-shi, Nagano-ken 392-8502 (JP); Koike, Yoshikazu, Suwa-shi, Nagano-ken 392-8502 (JP)
(74) Representative: Hoffmann, Eckart, Dipl.-Ing.

(56) References cited:
- EP-A- 0 406 431
- DE-A- 4 436 898
- US-A- 5 945 759
- PATENT ABSTRACTS OF JAPAN vol. 1999, no. 02, 26 February 1999 (1999-02-26) & JP 10 304644 A (SEIKO EPSON CORP), 13 November 1998 (1998-11-13)
- PATENT ABSTRACTS OF JAPAN vol. 009, no. 240 (E-345), 26 September 1985 (1985-09-26) & JP 60 091852 A (RIKOO TOKEI KK), 23 May 1985 (1985-05-23)

## Description

The present invention relates to a stepping motor, and, more particularly, to a hybrid-type stepping motor suitable for use in, for example, an inkjet printer or a scanner.

An example of a known hybrid-type stepping motor is known from JP 10-30 46 44 and is illustrated in Fig. 7. The stepping motor 1 includes a three-phase six-pole stator 6, a pair of brackets 7a and 7b, each fitted to a respective one of the two axial end faces of the stator 6 thereby engaging an outer peripheral surface of one of the end faces, and a rotor 9 arranged inside the ring shaped stator 6 and rotatably supported by the pair of brackets 7a and 7b through bearings 8a and 8b.

The rotor 9 comprises a rotary shaft 10, a disc-shaped permanent magnet 11 secured to the rotary shaft 10, and gear-like rotor cores 12a and 12b each having tooth-like poles formed on their peripheral face. The pole pitch of the rotor core 12a is the same as that of the rotor core 12b. Each of the rotor cores 12a, 12b is secured to a corresponding one of the two axial end faces of the permanent magnet 11.

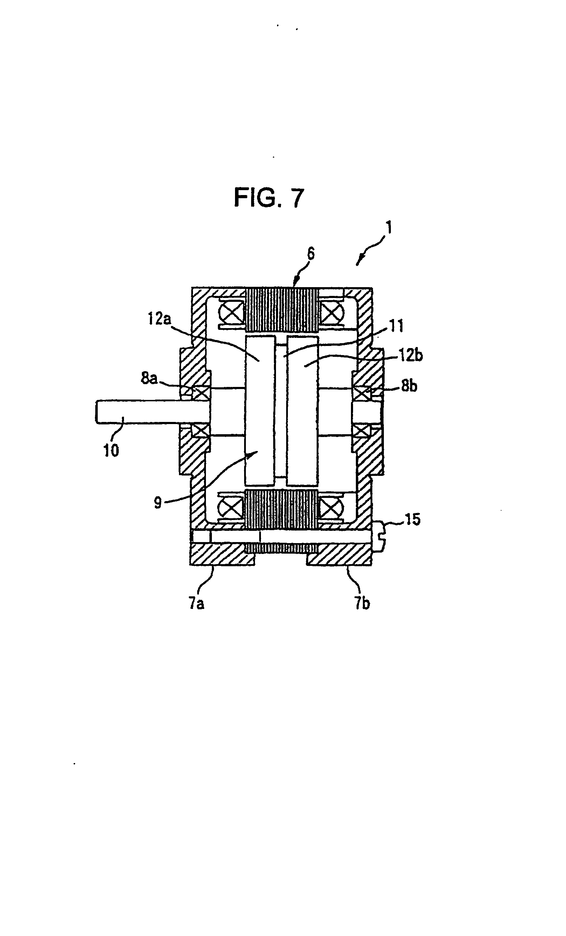

The rotor core 12a is displaced angularly relative to the rotor core 12b by half the pole pitch, so that, if viewed in the axial direction, each pole (not shown) of the rotor core 12b is aligned with the space between two adjacent poles (not shown) of the rotor core 12a. In Fig. 7, reference numeral 15 denotes a bolt for securing the pair of brackets 7a and 7b to the stator 6.

It is well known that hybrid-type stepping motors have a high noise level and vibrate considerably, Yet, no solution has been offered so far that would allow to effectively reduce the noise and vibrations.

The object of the present invention is to provide a stepping motor in which generation of acoustic noise and mechanical vibration is reliably and effectively reduced compared to prior art stepping motors.

This object is achieved with a stepping motor as claimed in claim 1. Preferred embodiments of the invention are subject-matter of the dependent claims.

The present inventors found out that for a standard hybrid-type stepping motor with an air gap of 50 µm, when the tangential force on the rotor generating a torque was 1, the radial attraction/repulsion force (the vibrational force) between the stator 6 and the rotor 9 was over 10, while the axial force (the magnetic repulsion force between the steel plates forming the stator core) was about 0.1 (all values normalized to the same arbitrary basis). By suppressing the radial vibration of the stator caused by the radial vibrational force, the noise can be effectively reduced. In accordance with the present invention, vibrations of the stator in the radial direction are substantially suppressed by restraining the stators radial motion both from radial inside the stator and radial outside the stator.

The positioning of the brackets with respect to the outer peripheral surface of the stator, and the positioning of the support members with respect to the inner peripheral surface of the stator are independent from one another. Therefore, the stator can be sandwiched between the support members and the brackets, respectively, with high precision, and thus be reliably clamped in the radial direction of the stator from both the inner peripheral surface and the outer peripheral surface thereof.

Preferred embodiments of the present invention will be described below with reference to the drawings, in which:
- Fig. 1: is a perspective view illustrating an embodiment of the hybrid-type stepping motor in accordance with the present invention,
- Fig. 2: is a sectional view of the hybrid-type stepping motor,
- Fig. 3: is a plan view of a stator core as viewed from an axial direction thereof,
- Fig. 4: is a plan view of a modification of the stator core as viewed from the axial direction thereof,
- Fig. 5: is a plan view of a modification of the pair of brackets,
- Fig. 6: is a plan view of another modification of the pair of brackets, and
- Fig. 7: is a sectional view of a conventional hybrid-type stepping motor.

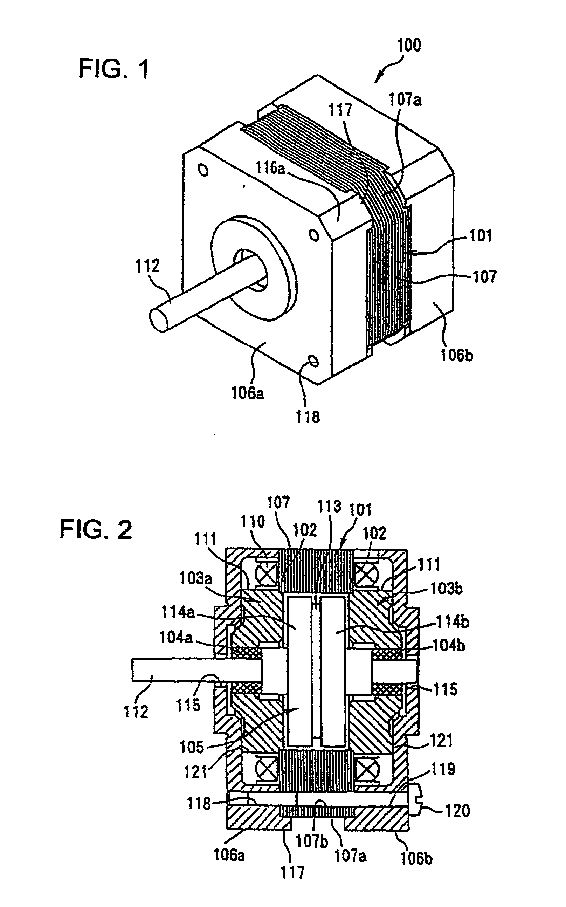

An embodiment of the hybrid-type stepping motor in accordance with the present invention will now be described with reference to Figs. 1 to 3. The hybrid-type stepping motor 100 includes a three-phase six-pole stator 101, a pair of support members 103a and 103b, each fitted to a respective one of the two opposite axial end portions of the stator 101, a rotor 105 arranged radially inside of and surrounded by the stator 101 and rotatably supported through bearings 104a and 104b held by the support members 103a and 103b, and a pair of brackets 106a and 106b, each fitted to a respective one of the two axial end portions of the stator 101.

The stator 101 includes a stator core 107 having a substantially cylindrical form with a substantially square shaped outer contour in cross-section. On the inner peripheral surface of the stator core 107, six magnetic poles A1, B1, C1, A2, B2, and C2 are formed at equal angular intervals in the circumferential direction. Each of these magnetic poles is substantially T-shaped with a radially extending support 108 and a circumferentially extending toothed portion 109. The support 108 connects the toothed portion 109 to inner peripheral surface of the stator core 107 and is joined to the center portion of the toothed portion 109 in the circumferential direction of the latter. On its side facing to the radial center of the stator core 107, each toothed portion 109 comprises a plurality of small teeth 109a.

The four corners of the outer peripheral surface of the stator core 107 are each chamfered forming arc-shaped chamfered portions 107a. Bolt insertion holes 107b extending in the axial direction of the stator 101 are formed near these chamfered portions 107a, respectively.

The support members 103a and 103b are cylindrical members, whose outer peripheral surface includes a large-diameter portion 111 whose diameter is slightly larger than the inside diameter of the stator 101, and a small-diameter portion 102 whose diameter is about the same as the inside diameter of the stator 101. When the small-diameter portions 102 are fitted into the respective end portions of the stator 101 in the axial direction thereof so as to engage inner peripheral surface portions of the stator core 107, the small-diameter portions 102 are disposed coaxially with the stator core 107.

The bearings 104a and 104b which rotatably support the rotary shaft 112 of the rotor 105 are, for example, press-fitted into corresponding bores or recesses of the support members 103a and 103b, respectively.

The rotor 105 comprises the rotary shaft 112, a disc-shaped permanent magnet 113 secured to the rotary shaft 112, and gear-like rotor cores 114a and 114b having tooth-like poles formed on their peripheral face. The pole pitch of the rotor core 114a is the same as that of the rotor core 114b. Each of the rotor cores 114a and 114b is secured to a corresponding one of the two axial end faces of the permanent magnet 113. The permanent magnet 113 and the rotor cores 114a and 114b are positioned between the support members 103a and 103b and inside the stator core 107. Thus, the rotor cores and the permanent magnet are surrounded by the stator 101 while being spaced apart from a cylindrical surface defined by the radially inner ends of the teeth 109a by a very small air gap of about 50 µm to 100 µm.

The rotor core 114a is displaced angularly relative to the rotor core 114b by half the pole pitch, so that, if viewed in the axial direction, each pole (not shown) of the rotor core 114b is aligned with the space between two adjacent poles (not shown) of the rotor core 114a.

The brackets 106a and 106b each have a bottom and a square cylindrical outer shape, which is virtually the same as the shape of the stator core 107. A hole 115 for allowing the rotary shaft 112 to extend through the brackets is formed in the center portion of the bottom of each of the brackets 106a and 106b. The four corners of the outer peripheral surface of each of the brackets 106a and 106b is chamfered forming chamfered portions 116a in correspondence with associated chamfered portions 107a of the stator 101.

Protrusions 117 are provided to extend from the chamfered portions 116a of the brackets 106a and 106b in the axial direction of the stator 101 and onto the respective chamfered portions 107a of the stator 101 as is best shown in Fig. 1 and the lower part of Fig. 2. The stator core 107 is thus sandwiched in its radial direction between the protrusions 117 on the one hand and the small-diameter portions 102 of the support members 103a and 103b on the other hand.

At the four comers of the bottom of the bracket 106a, threaded holes 118 are formed coaxially with the respective bolt insertion holes 107b in the stator core 107. At the four corners of the bottom of the bracket 106b, bolt insertion holes 119 are formed coaxially with the respective bolt insertion holes 107b. By inserting securing bolts 120 into the holes 119 and 107b and screwing them into the respective threaded holes 118, the brackets 106a and 106b are secured to the stator 101.

When the brackets 106a and 106b are secured to the stator 101, an end face of the large-diameter portion 111 of each of the support members 103a and 103b contacts a respective end face of the stator core 107, and a peripheral edge portion of an end face of each of the support members 103a and 103b facing away from the stator 101 contacts the bottom of a respective bracket 106a and 106b. A fluoroplastic coating 121 or the like is applied to the surfaces of the support member 103a and the bracket 106a that contact each other and to the surfaces of the support member 103b and the bracket 106b that contact each other, in order to reduce friction between these component parts.

As can be understood from the foregoing description, in the embodiment, since the protrusions 117 of the brackets 106a and 106b and the small-diameter portions 102 of the support members 103a and 103b are provided so as to sandwich the stator core 107 in its radial direction, vibration of the stator 101 in the radial direction caused by a vibrational force in the radial direction that is about 100 times the axial vibrational force can be suppressed from both the radially inner side and the radially outer side of the stator core 107. As a result, noise and vibration can be effectively reduced.

A comparative test was conducted on a stepping motor according to the embodiment and the conventional stepping motor according to Fig. 7. The stepping motor of the embodiment and the conventional stepping motor of Fig. 7 were rotated at a speed of 1020 rpm, and the level of the noise generated from these stepping motors was measured at a distance of 10 cm from these stepping motors. The results are given in Table 1. Note that two samples according to the invention with the same structure were tested. According to Table 1, when the structure of the stepping motor of the embodiment is used, the noise level can be significantly reduced, regardless of whether the stepping motor is used alone or is mounted in a printer to feed sheets.

**Table 1**

| | Conventional Type dB (A) | Invention, Sample 1 dB (A) | Invention, Sample 2 dB (A) |
|---|---|---|---|
| Stepping Motor used alone | 43.5 | 39.6 | 39.6 |
| Stepping Motor mounted in printer for feeding sheets | 59.7 | 56.3 | 56.0 |

The brackets 106a and 106b and the support members 103a and 103b are separately formed so that the brackets 106a and 106b can be freely positioned in their radial direction with respect to the support members 103a and 103b, respectively. Therefore, the positioning of the brackets 106a and 106b with respect to the outer side of the stator core 107 and the positioning of the support members 103a and 103b with respect to the inner side of the stator core 107 can be performed separately. As a result, the stator core 107 can be precisely sandwiched between the support members 103a and 103b and the brackets 106a and 106b, respectively, with high precision, making it possible to reliably sandwich the stator 101 in the radial direction thereof from both its inner peripheral surface and its outer peripheral surface.

As mentioned, a fluoroplastic coating 121 or the like is applied to the surfaces of the support members 103a, 103b and the brackets 106a, 106b that contact each other, in order to reduce friction between these component parts. Therefore, when the brackets 106a and 106b are being mounted, they can be slid with respect to the respective support member 103a, 103b. As a result, it is possible to prevent the support members 103a and 103b from limiting the freedom with which the brackets 106a and 106b can be positioned. This makes it possible to facilitate assembly of the brackets 106a and 106b, and to separately sandwich and position the stator 101 from the inner side and the outer side thereof.

The bearings 104a and 104b which support the rotary shaft 112 of the rotor 105 are directly supported by the support members 103a and 103b fitted to the inside of the stator core 107. Therefore, compared to the case where the bearings 104a and 104b are supported by the brackets 106a and 106b, it is easier to have the stator 101 and the rotary shaft 112 of the rotor 105 to be concentric. As a result, a uniform air gap can be formed between the rotor 105 and the stator 101.

Although in the above-described embodiment a fluoroplastic coating 121 was used as means for reducing friction between the surfaces of the support members 103a, 103b and the brackets 106a, 106b that contact each other, the present invention is not limited thereto. In order to reduce friction, the contact surfaces may, alternatively, be subjected to surface treatment so as to reduce the area of contact of the contact surfaces.

In place of the friction reducing means or in addition to the friction reducing means, vibration absorbing members (not shown) such as resilient members or low resiliency rubbers may be interposed between the surfaces of the support member 103a and the bracket 106a that contact each other and between the surfaces of the support member 103b and the bracket 106b that contact each other.

When this is done, it is possible to prevent vibration at the side of the support members 103a and 103b and vibration at the side of the brackets 106a and 106b from interfering with each other. Therefore, noise/vibration can be reduced more effectively, and the securing bolts 120 can be prevented from loosing due to the resiliency of the vibration absorbing members.

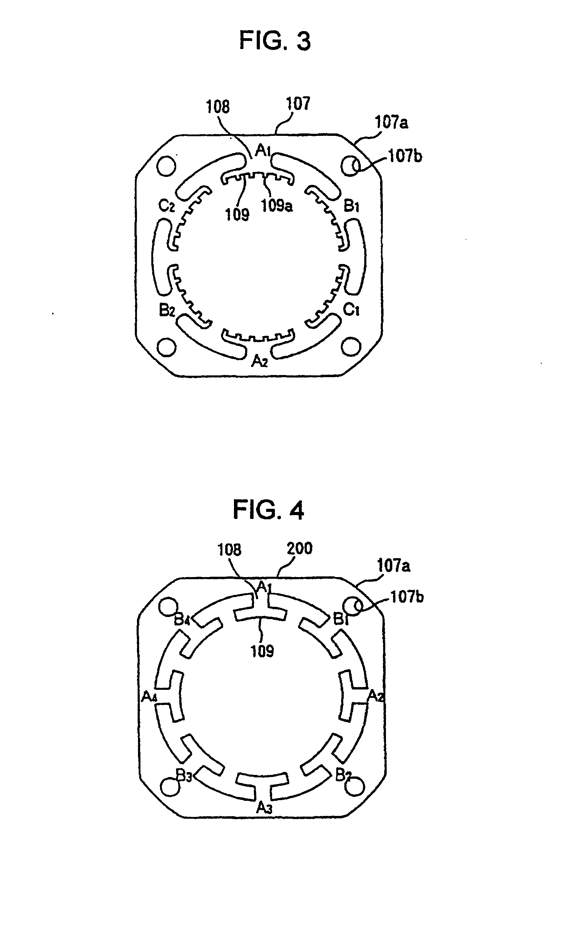

Although in the above-described embodiment a hybrid-type stepping motor with a three-phase six-pole stator 101 was used, it is obvious that the present invention may also be applied to, for example, a hybrid-type stepping motor with a two-phase eight-pole stator illustrated in Fig. 4 or to other types of generally used hybrid-type stepping motors, regardless of the number of phases and number of poles.

In the stator core 200 of the stator of Fig. 4, insertion holes 107b for the securing bolts 120 are disposed on respective radial lines passing through the supports 108 of the magnetic poles B1, B2, B3, and B4. Therefore, vibration transmitted from the supports 108 in their radial direction can be suppressed at the location where the securing bolts 120 are secured. As a result, it is possible to reduce noise/vibration even more effectively.

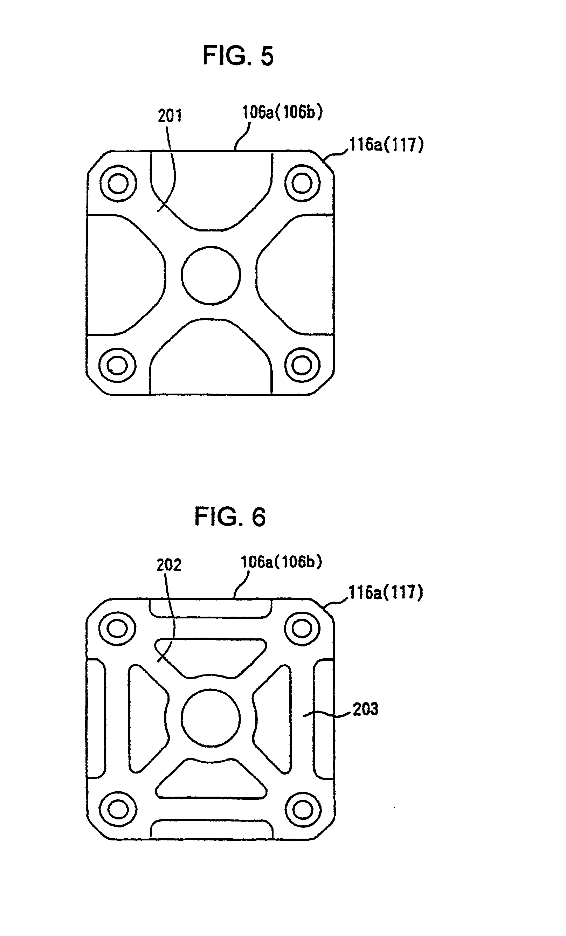

As shown in Fig. 5, when the protrusions 117 formed at the four corners of the brackets 106a and 106b are connected by respective diagonal, line-like ribs 201, the rigidity of each of the protrusions 117 is increased. The same applies when, as shown in Fig. 6, these protrusions 117 are connected by respective diagonal, line-like ribs 202 as well as by ribs 203 extending substantially parallel to the peripheral faces of the stator core 200. This allows more reliable sandwiching of the stator 101 in the radial direction between these protrusions 117 and the small diameter portions 102 of the support members 103a and 103b.

As is clear from the foregoing description, according to the present invention, by suppressing vibration of the stator in its radial direction produced by a radial vibrational force between the stator and the rotor, a stepping motor which makes it possible to reduce noise and vibration reliably and effectively can be provided.

## Claims

1. A stepping motor comprising:
a stator (101) including a stator core (107; 200) having a plurality of magnetic poles (108, 109) formed at equiangular intervals on an inner peripheral surface of the stator core (107) in the peripheral direction thereof, each magnetic pole including a support (108) and a toothed portion (109), a winding (110) being placed upon the magnetic poles;
a rotor (105) which is inserted into the stator (101) and which is rotatably supported through a pair of bearings (104a, 104b); and
a pair of brackets (106a, 106b), respectively fitted to the two axial end portions of the stator core (107) whereby each bracket (106a, 106b) has engagement means (117) engaging an outer peripheral surface of the corresponding one of said end portions;
**characterized in that**
a pair of support members (103a, 103b) are respectively disposed at said two axial end portions of the stator core (107), each support member having an engagement portion (102) engaging an inner peripheral surface of the corresponding one of said end portions
such that the stator core (107) is sandwiched in its radial direction between said engagement portions (102) of the support members (103a, 103b) on the one hand and the engagement means (117) of the brackets (106a, 106b) on the other hand; and
the support members (103a, 103b) and the brackets (106a, 106b) are separate elements in order not to limit the freedom with which the brackets are positioned with respect to the support members in a radial direction thereof.

2. The motor according to Claim 1, wherein friction reducing means (121) is provided between the surfaces of the brackets (106a, 106b) and the surfaces of the support members (106a, 106b) (103a, 103b) that contact each other in an axial direction thereof.

3. The motor according to Claim 1 or Claim 2, wherein a vibration absorbing member is interposed between the surfaces of the brackets (106a, 106b) and the surfaces of the support members (106a, 106b) that contact each other in the axial direction thereof.

4. The motor according to any one of Claims 1 to 3, wherein the brackets (106a, 106b) are secured to the stator core (107) with bolts (120), each bolt being positioned such that its axis intersects a line extending from the support of a corresponding one of said magnetic poles radially to the stator core (107).

5. The motor according to any one of Claims 1 to 4, wherein the bearings (104a, 104b) are respectively mounted on the support members (103a, 103b).

6. The motor according to any one of Claims 1 to 5, wherein one or more ribs (201, 202, 203) for reinforcing the respective engagement means (117) are provided on each of the brackets (106a, 106b).

## Patentansprüche

1. Schrittmotor mit;
einem Ständer (101), der einen Ständerkern (107; 200) umfaßt, welcher eine Vielzahl Magnetpole (108, 109) hat, die in gleichen Winkelabständen auf einer inneren Umfangsfläche des Ständerkerns (107) in Umfangsrichtung desselben ausgebildet sind, von denen jeder Magnetpol einen Steg (108) und einen Zahnabschnitt (109) hat, wobei auf den Magnetpolen eine Wicklung (110) angebracht ist;
einem Läufer (105), der in den Ständer (101) eingesetzt und durch ein Paar Lager (104a, 104b) drehbar abgestützt ist; und
einem Paar Lagerböcke (106a, 106b), die jeweils an den beiden axialen Stirnteilen des Ständerkerns (107) angebracht sind, wodurch jeder Lagerbock (106a, 106b) Eingriffsmittel (117) hat, die mit einer äußeren Umfangsfläche des entsprechenden der Stirnteile in Eingriff stehen;
**dadurch gekennzeichnet, daß** ein Paar Stützglieder (103a, 103b) jeweils an den beiden axialen Stirnteilen des Ständerkerns (107) angeordnet sind und jedes Stützglied einen Eingriffsteil (102) hat, der mit einer inneren Umfangsfläche des entsprechenden der Stirnteile in Eingriff steht, so daß der Ständerkern (107) in seiner radialen Richtung zwischen den Eingriffsteilen (102) der Stützglieder (103a, 103b) einerseits und den Eingriffsmitteln (117) der Lagerböcke (106a, 106) andererseits schichtartig angeordnet ist; und
daß die Stützglieder (103a, 103b) und die Lagerböcke (106a, 106b) getrennte Elemente sind, um die Freiheit, mit der die Lagerböcke gegenüber den Stützgliedern in einer radialen Richtung derselben positioniert werden, nicht zu begrenzen.

2. Motor nach Anspruch 1, bei dem zwischen den Oberflächen der Lagerböcke (106a, 106b) und den Oberflächen der Stützglieder (103a, 103b), die einander in einer axialen Richtung derselben berühren, eine Reibungsreduziereinrichtung (121) vorgesehen ist.

3. Motor nach Anspruch 1 oder 2, bei dem zwischen den Oberflächen der Lagerböcke (106a, 106b) und den Oberflächen der Stützglieder (106a, 106b), die einander in der axialen Richtung derselben berühren, ein Schwingungsabsorbierteil vorgesehen ist.

4. Motor nach einem der Ansprüche 1 bis 3, bei dem die Lagerböcke (106a, 106b) am Ständerkern (107) mit Bolzen (120) befestigt sind, von denen jeder Bolzen so angeordnet ist, daß seine Achse eine Linie schneidet, die sich von dem Steg eines entsprechenden der Magnetpole radial zum Ständerkern (107) erstreckt.

5. Motor nach einem der Ansprüche 1 bis 4, bei dem die Lager (104a, 104b) jeweils an den Stützgliedern (103a, 103b) angebracht sind.

6. Motor nach einem der Ansprüche 1 bis 5, bei dem eine oder mehr Rippen (201,202, 203) zum Verstärken der jeweiligen Eingriffsmittel (117) an jedem der Lagerböcke (106a, 106b) vorgesehen sind.

## Revendications

1. Moteur pas à pas comportant :
un stator (101) comportant un noyau (107 ; 200) de stator ayant une pluralité de pôles (108, 109) magnétiques formés à des intervalles équi-angulaires sur une surface périphérique intérieure du noyau (107) de stator dans sa direction périphérique, chaque pôle magnétique comportant un support (108) et une partie (109) dentée, un enroulement (110) étant placé sur les pôles magnétiques ;
un rotor (105) est inséré dans le stator (101) et qui est supporté en rotation par l'intermédiaire d'une paire de paliers (104a, 104b); et
une paire de supports (106a, 106b), adaptés respectivement aux deux parties d'extrémité axiales du noyau (107) de stator, grâce à quoi chaque support (106a, 106b) comporte des moyens (117) de coopération qui coopèrent avec une surface périphérique extérieure d'une partie correspondante des parties d'extrémité ;
**caractérisé en ce qu'**une paire d'éléments (103a, 103b) de support sont disposés respectivement aux deux parties d'extrémité axiales du noyau (107) de stator, chaque élément de support ayant une partie (102) de coopération coopérant avec une surface périphérique intérieure d'une partie correspondante des parties d'extrémité, de sorte que le noyau (107) de stator est pris en sandwich dans sa direction radiale entre les parties (102) de coopération des éléments (103a, 103b) de support d'une part et les moyens (117) de coopération des supports (106a et 106b) d'autre part ; et
les éléments (103a, 103b) de support et les supports (106a, 106b) sont des éléments distincts afin de ne pas limiter la liberté avec laquelle les supports sont positionnés par rapport aux éléments de support dans sa direction radiale.

2. Moteur suivant la revendication 1, dans lequel les moyens (121) de réduction de frottement sont prévus entre les surfaces des supports (106a, 106b) et les surfaces des éléments (106a, 106b) (103a, 103b) de support qui viennent en contact mutuellement dans sa direction axiale.

3. Moteur suivant la revendication 1 ou 2, dans lequel un moyen d'absorption de vibrations est interposé entre les surfaces des supports (106a, 106b) et les surfaces des éléments (106a, 106b) de support qui viennent en contact mutuellement dans leur direction axiale.

4. Moteur suivant l'une quelconque des revendications 1 à 3, dans lequel les supports (106a et 106b) sont fixés au noyau (107) de stator avec des vis (120), chaque vis étant positionnée de sorte que son axe coupe une ligne allant du support de l'un correspondant des pôles magnétiques radialement au noyau (107) de stator.

5. Moteur suivant l'une quelconque des revendications 1 à 4, dans lequel les paliers (104a, 104b) sont montés respectivement sur les éléments (103a, 103b) de support.

6. Moteur suivant l'une quelconque des revendications 1 à 5, dans lequel une ou plusieurs nervures (201, 202, 203) pour renforcer des moyens 117 de coopération respectifs sont disposées sur chacun des supports (106a, 106b).
